# EUROPEAN PATENT SPECIFICATION

(11) **EP 2 985 577 B1**
(45) Date of publication and mention of the grant of the patent: **28.10.2020**
(21) Application number: 13882029.5
(22) Date of filing: 08.04.2013
(51) Int. Cl.: B65B 39/00, G01G 19/393, B65B 37/18

(54) **COLLECTION DEVICE AND COMBINATION SCALE**
SAMMELVORRICHTUNG UND KOMBINATIONSWAAGE
DISPOSITIF DE RECUEIL ET BALANCE COMBINATOIRE

(43) Date of publication of application: 17.02.2016
(73) Proprietor: Yamato Scale Co., Ltd., Akashi-shi, Hyogo 673-0849 (JP)
(72) Inventor: NAGAI, Takayuki, Akashi-shi, Hyogo 673-0849 (JP)
(74) Representative: Ter Meer Steinmeister & Partner
(86) International application number: PCT/JP2013/002398
(87) International publication number: WO 2014/167595

(56) References cited:
- EP-A1- 1 821 084
- EP-A1- 2 053 369
- WO-A1-2012/056495
- JP-A- 2003 075 241
- JP-A- 2006 153 541
- JP-A- 2009 288 157
- JP-A- 2009 288 157
- JP-U- S 608 842
- JP-U- S62 143 601

## Description

### TECHNICAL FIELD

This invention relates to a collection device configured to collect weighed articles, such as snacks, and throw the collected articles in, for example, a packaging machine, and a combination scale using the collection device.

### BACKGROUND ART

Conventionally, articles, for example, snacks, are weighed by a combination scale, and the articles having a weight that falls within a predetermined weight range are thrown into a packaging machine located down below the combination scale to be packed in bags.

So far were disclosed the combination scales directed to improvements in weighing speed. Some of such combination scales are provided with a plurality of, for instance, two discharge paths to discharge articles from their weigh hoppers, wherein the weighed articles having a weight that falls within a predetermined weight range are discharged from one of the discharge paths and then the other, alternately (for example, patent document 1).

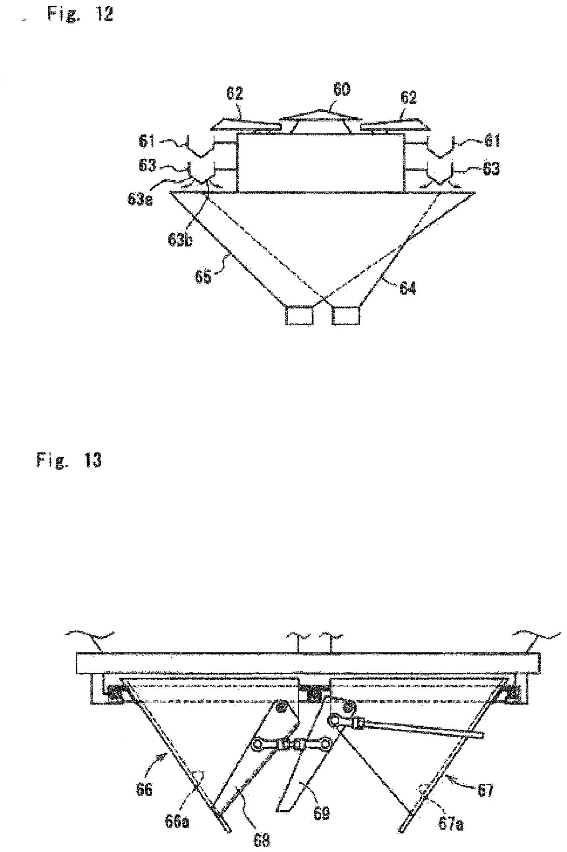

Fig. 12 is a schematic drawing of structural characteristics of the combination scale described in the patent document 1. This combination scale has a conical distribution feeder 60. The distribution feeder 60 receives the articles, such as snacks, from outside of the feeder and radially distributes the articles (not illustrated in the drawing) by way of vibrations. Around the distribution feeder 60 are a plurality of linear feeders 62 that feeds the articles by way of vibrations into feeding hoppers 61. The feeding hoppers 61 are disposed at positions below the delivery ends of the linear feeders 62. Below the feeding hoppers 61 are a plurality of weigh hoppers 63 correspondingly to these hoppers. The feeding hoppers 61 and the weigh hoppers 63 are arranged annularly around the distribution feeder 60 located at the center.

A pair of discharge gates 63a and 63b of the weigh hoppers 63 is allowed to open and close inward and outward to discharge the weighed articles having a weight that falls within a predetermined weight range inward and outward alternately. Below the weigh hoppers 63 are an inward collecting chute 64 and an outward collecting chute 65. The inward collecting chute 64 collects the articles discharged inward and drops them downward. The outward collecting chute 64 collects the articles discharged outward and drops them downward.

This combination scale weighs the articles, such as snacks, delivered into the weigh hoppers 63 and performs combination calculations based on the weight values of the weighed articles to obtain a combination of the weigh hoppers 63 in which a total weight value of the weighed articles falls within a predetermined weight range. Then, the combination scale alternately discharges the articles in the combination of the weigh hoppers 63 downward into the inward collecting chute 64 or the outward collecting chute 65.

To weigh the articles using the combination scale having two discharge paths and throw the weighed articles having a weight that falls within a predetermined weight range into the packaging machine, a pair of collection hoppers is conventionally disposed at positions below discharge ports of the two discharge paths. The paired collection hoppers temporarily store therein the discharged articles and then throw the articles by turns into the packaging machine in a timing- coordinated manner (for example, patent document 2).

Fig. 13 is a front view of the collection hoppers described in the patent document 2. A pair of collection hoppers 66 and 67 is disposed at positions below the discharge ports of the two discharge paths. The weighed articles having a weight that falls within a predetermined weight range are discharged from the two discharge paths and thrown into one of the collection hoppers 66 and 67 and the other, alternately. The collection hoppers 66 and 67 temporarily store therein the articles and then discharge them by turns in a timing-coordinated manner.

On opposing side surfaces of the collection hoppers 66 and 67 are provided discharge gates 68 and 69. The gates 68 and 69 operate in an interlocking manner such that one of the gates 68 (69) opens when the other gate 69 (68) closes. The articles in the collection hoppers 66 and 67 are discharged diagonally downward along inclined inner surfaces 66a and 67a.

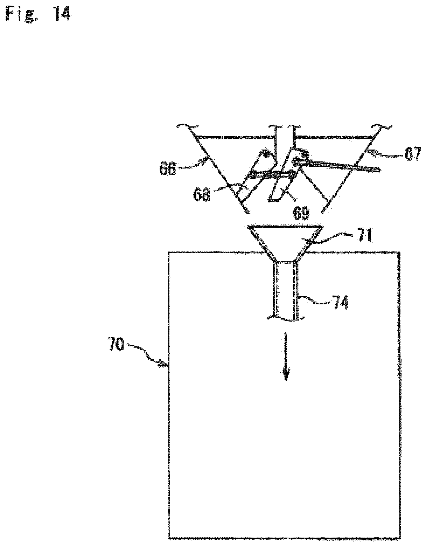

Below the paired collection hoppers 66 and 67, a packaging machine 70 is installed as illustrated in Fig. 14. The articles are thrown out of one of the collection hoppers 66 and 67 and then the other, alternately, into an input port 71 of the packaging machine 70. A forming tube 74, which will be described later, is coupled to the lower end of the input port 70.

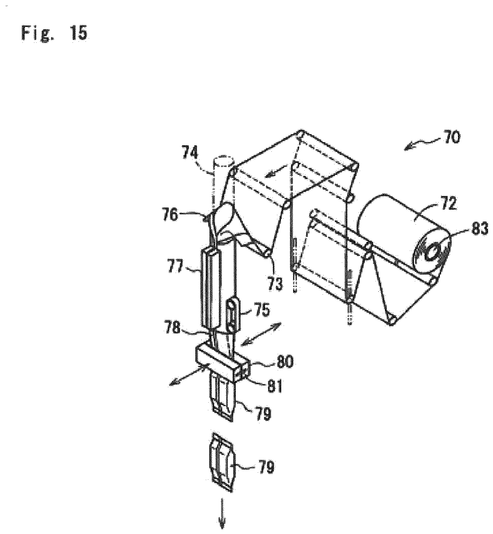

The patent document 3 describes a packaging machine. This packaging machine receives the articles having a weight that falls within a predetermined weight range from the collection hoppers of the combination scale and packs the articles in a bag. Fig. 15 is a schematic perspective view of principal structural elements in the packaging machine described in the patent document 3.

The packaging machine 70 has a tubular forming tube 74, a former 76 that winds a packing material 72 around the forming tube 74, a pull-down belt device 75, a vertical sealing device 77 for vertical weld-sealing, a lateral sealing device 80 for lateral weld-sealing, a roller 73, and the sheet-like packing material 72 wrapped around the roll 83.

The forming tube 74 is coupled to the input port 71 of the packaging machine 70 as illustrated in Fig. 14. As illustrated in Fig. 15, the forming tube 74 is provided with the former 76 that winds the sheet-like packing material 72 around the forming tube 74. The roller 73 is located in the vicinity of the former 76. The sheet-like packing material 72 wrapped around the roll 83 is drawn out and taken up by the roller 73 and then wound around the forming tube 74 by the former 76.

The forming tube 74 has, on its lower part, the pull-down belt device 75 that feeds the packing material 72 downward. The pull-down belt device 75 is pushed against and attached to the forming tube 74. The vertical sealing device 77 is disposed at a position on substantially the same level in height as the pull-down belt device 75. The lateral sealing device 80 is disposed at a position below the forming tube 74.

The sheet-like packing material 72 is wound around the forming tube 74 and reformed in a tubular shape. The packing material 72 is sealed at its vertical edges by the vertical sealing device 77 and sealed at its lateral edge, or lower end, by the lateral sealing device 80. The articles are discharged from the collection hopper 66 or the collection hopper 67 of the combination scale and put in the lower-end sealed packing material 72 formed in a tubular shape. The upper end of the tubular packing material 72 is then sealed by the lateral sealing device 80 to form the packing material 72 into a bag (package). Then, the formed bag is cut and separated at the center of its laterally sealed part by a cutter 81 of the lateral sealing device 8.

In case of using smaller bags, naturally with smaller capacities, in the packaging machine 70, the opening of the forming tube 74 in communication with the input port 71 of the packaging machine 70 illustrated in Fig. 14 is reduced in diameter. To throw the articles having a weight that falls within a predetermined weight range into the forming tube 74 thus having a smaller opening, the articles are likely to contact an opening edge of the forming tube 74 unless the collection hoppers 66 and 67 are located in proximity to each other so that the articles can be dropped from right above the forming tube 74. Any of articles that contacted the opening edge may arrive later than the other articles at the position of the lateral sealing apparatus 80 below the forming tube 74. Such an article may be trapped in a part-to-be-sealed of the packing material during the lateral sealing, resulting in improper sealing.

The cited document 4 may be directed to solving the problem, wherein a pair of collection hoppers (collecting containers) is oscillated and thereby located by turns at a position right above the packaging machine, so that the articles may be dropped vertically downward from the position.

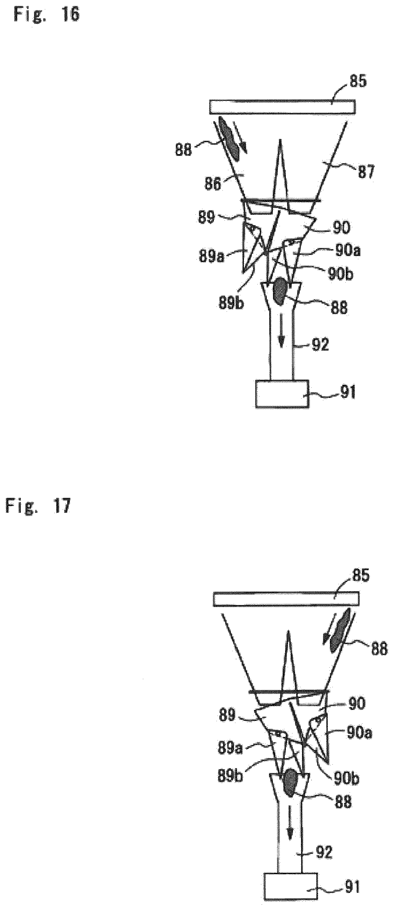

Figs. 16 and 17 are schematic drawings of the collection hoppers described in the cited document 4.

Articles 88 from a weighing apparatus 85 are collected in a pair of collection hoppers (collecting container) 89 and 90 by feeders 86 and 87. The collection hoppers 89 and 90 respectively have a pair of opening and closing members 89a and 89b and a pair of opening and closing members 90a and 90b. The collection hoppers are oscillated to locate the paired opening and closing members 89a and 89b, and then the paired opening and closing members 90a and 90b, alternately, at a position right above an input tube 92 of a packaging machine 91 to throw the articles 88 into the input tube 92 of the packaging machine 91.

### PRIOR ART DOCUMENT

### PATENT DOCUMENT

PATENT DOCUMENT 1: Japanese Laid-Open Utility Model Application No. S61-84821
PATENT DOCUMENT 2: Japanese Laid-Open Patent Application No. S59-88628
PATENT DOCUMENT 3: Japanese Laid-Open Patent Application No. H10-218122
PATENT DOCUMENT 4: Japanese Patent No. 4129997

JP 2009 299157 A discloses a collection hopper which can temporarily hold weighed matter ejected from an inside chute and to outside chutes and can facilitate the work of detachment and attachment, and a combination balance using it.

EP 2 053 369 A1 discloses a combination weigher capable of reducing a batch time of objects to be weighed on a collecting chute and of a high speed operation, irrespective of characteristic or the like of the objects to be weighed. This combination weigher includes a plurality of upper collecting chutes disposed below weighing hoppers, a plurality of upper collecting hoppers, respectively provided at discharge outlets of the upper collecting chutes, a lower collecting shoot provided below the upper collecting hoppers, a lower collecting hopper provided at a discharge outlet of the lower collecting chute, and a control unit which repeatedly forms a combination process to determine one discharge combination of the weighing hoppers.

The document EP1821084 A1 discloses a combination scale according to the state of the art.

### SUMMARY OF THE INVENTION

### PROBLEMS TO BE SOLVED BY THE INVENTION

The cited document 4 provides the solution; oscillating at high speeds the collection hoppers 89 and 90 to open the paired opening and closing members 89a and 89b and the paired opening and closing members 90a and 90b right above the input tube 92 of the packaging machine 91 and dropping the articles 88 through the openings downward. The high-speed oscillation of the collection hopper 89, 90, however, generates inertia that affects the articles 88, inviting them to contact an opening edge of the input port 92. This causes a delay in the arrival of the articles, possibly resulting in improper sealing.

The invention was accomplished to solve the problem. The invention provides a collection device that may allow the articles discharged from a plurality of discharge paths to be gathered well and collectively discharged, and a combination scale provided with the collection device.

### SOLUTIONS TO THE PROBLEM

To this end, the invention provides the following technical features.
1) A collection device includes: an upper collection hopper configured to temporarily store articles thrown therein from at least two discharge paths and then discharge the articles in diagonally downward directions, the collection device further including a lower collection hopper configured to temporarily store therein the articles discharged from the upper collection hopper and then discharge the articles vertically downward, wherein
   the upper collection hopper includes at least two storage chambers that store therein the articles, respectively,
   the two storage chambers are integrally coupled into a single unit with a partition wall interposed therebetween as a boundary,
   one of the storage chambers discharges the stored articles in the diagonally downward direction defined as a first direction, and another one of the storage chambers discharge the stored articles in the diagonally downward direction defined as a second direction, and
   the lower collection hopper includes a storage chamber that temporarily stores therein the articles discharged from the storage chambers of the upper collection hopper and then discharges the articles vertically downward.
   According to the collection device the articles are discharged from the two storage chambers of the upper collection hopper in the first direction or the second direction and stored in one storage chamber of the lower collection hopper, and then discharged vertically downward. Then, the articles may be successfully thrown into even an input port having a very small opening area of a packaging machine by simply locating the input port right below the lower collection hopper. Therefore, the prior art technique of oscillating two collection hoppers to locate them right above the packaging machine is no longer unnecessary. This structural advantage may prevent the event that a part of the articles affected by inertia contact an edge of the input port, causing a delay in the arrival of such an article and a resulting imperfect sealing in the packaging machine.
   Further advantageously, the storage chambers of the upper collection hopper temporarily store therein and then discharge the articles discharged from the discharge paths downward, and these storage chambers are integrally coupled into a single unit with the partition wall interposed therebetween as their boundary. The storage chambers may be accordingly located in proximity to each other as compared to the prior art wherein the articles discharged from the discharge paths are temporarily stored in different collection hoppers and then discharged downward.
2) According to a preferred aspect of the collection device, the storage chambers of the upper collection hopper respectively have upper openings facing discharge ports of the two discharge paths, lower openings through which the articles are to be discharged in the first direction or the second direction, and gates that open and close the lower openings, and
   the storage chamber of the lower collection hopper has an upper opening through which the articles discharged through the lower openings of the storage chambers of the upper collection hopper are to be thrown in, a lower opening through which the articles are to be discharged vertically downward, and a pair of gates that opens and closes the lower opening.
   According to this preferred aspect wherein the lower openings of the storage chambers may be located in proximity to each other, inner surfaces of the storage chambers that guide the articles to the lower openings to be discharged may be inclined at sharp angles. As a result, the articles may be gathered well and collectively thrown into the lower collection hopper.
   The lower collection hopper, by opening the pair of gates, may drop the articles vertically downward.
3) According to another preferred aspect of the collection device, the storage chambers of the upper collection hopper and the storage chamber of the lower collection hopper have a downwardly tapered shape.
   According to this preferred aspect, the downwardly tapered storage chambers may allow for efficient downward discharge of the articles.
4) According to yet another preferred aspect of the collection device, a peripheral wall of the storage chamber of the lower collection hopper has opposing inner surfaces curved inward.
   According to this preferred example, when the articles are discharged from the storage chambers of the upper collection hopper and dropping downward with a parabolic trajectory into the lower collection hopper, the articles contact the gently curved surfaces of the storage chamber. This reduces the contact resistance, allowing the articles to be collected with less time.
5) According to yet another preferred aspect of the collection device, the gates of the storage chambers of the upper collection hopper are oscillatably supported on a common supporting point shaft.
   The structural feature according to this preferred aspect may eliminate the risk of misalignment that may occur with storage chamber gates supported on different supporting point shafts, allowing the gates to smoothly oscillate openably and closably around the common supporting point shaft.
6) A combination scale according to the invention is disclosed in claim 1.

The combination scale according to the invention is advantageously characterized in that one storage chamber of the lower collection hopper stores therein the articles discharged from the two storage chambers of the upper collection hopper and then discharge the articles vertically downward. Then, the articles may be successfully thrown into even an input port having a very small opening area of a packaging machine by simply locating the input port right below the lower collection hopper. Therefore, the prior art technique of oscillating two collection hoppers to locate them right above the packaging machine is no longer unnecessary. This structural advantage may prevent the event that a part of the articles affected by inertia contact an edge of the input port, causing a delay in the arrival of such an article and a resulting imperfect sealing in the packaging machine.

Further advantageously, the storage chambers of the upper collection hopper temporarily store therein and then discharge the articles discharged from the discharge paths downward, and these storage chambers are integrally coupled into a single unit with the partition wall interposed therebetween as their boundary. The storage chambers may be accordingly located in proximity to each other as compared to the prior art wherein the articles discharged from the discharge paths are temporarily stored in different collection hoppers and then discharged downward.

According to the invention wherein the lower openings of the storage chambers may be located in proximity to each other, inner surfaces of the storage chambers that guide the articles to the lower openings to be discharged may be inclined at sharp angles. As a result, the articles may be gathered well and collectively thrown into the lower collection hopper.

The lower collection hopper, by opening the pair of gates, may drop the articles vertically downward

### EFFECTS OF THE INVENTION

According to the collection device provided by the invention, the articles are discharged from the two storage chambers of the upper collection hopper in different directions and stored in one storage chamber of the lower collection hopper, and then discharged vertically downward. Then, the articles may be successfully thrown into even an input port having a very small opening area of a packaging machine by simply locating the input port right below the lower collection hopper.

Further advantageously, the storage chambers of the upper collection hopper temporarily store therein and then discharge the articles discharged from the discharge paths downward, and these storage chambers are integrally coupled into a single unit with the partition wall interposed therebetween as their boundary. The storage chambers may be accordingly located in proximity to each other as compared to the prior art wherein the articles discharged from the discharge paths are temporarily stored in different collection hoppers and then discharged downward.

According to the combination scale provided by the invention, the articles are discharged from the two storage chambers of the upper collection hopper in the first direction or the second direction and stored in one storage chamber of the lower collection hopper, and then discharged vertically downward. Then, the articles may be successfully thrown into even an input port having a very small opening area of a packaging machine by simply locating the input port right below the lower collection hopper. Therefore, the prior art technique of oscillating two collection hoppers to locate them right above the packaging machine is no longer unnecessary. This structural advantage may prevent the event that a part of the articles affected by inertia contact an edge of the input port, causing a delay in the arrival of such an article and a resulting imperfect sealing in the packaging machine.

### BRIEF DESCRIPTION OF THE DRAWINGS

Fig. 1 is a longitudinal front view of a combination scale according to an embodiment of the invention.
Fig. 2 is a top view of collecting chutes of the combination scale.
Fig. 3 is a partly broken front view of the collecting chutes and a collection device.
Fig. 4 is a front view of the collection device.
Fig. 5 is a perspective view of the collection device.
Fig. 6 is a top view of an upper collection hopper.
Fig. 7 is a side view of the upper collection hopper.
Fig. 8 is a view of the upper collection hopper taken along A-A line of Fig. 7.
Fig. 9 is a perspective view of a discharge gate driving structure of the upper collection hopper.
Fig. 10 is a longitudinal front view of a lower collection hopper.
Fig. 11 is a side view of one of discharge gates of the lower collection hopper.
Fig. 12 is a schematic view of a conventional combination scale having a plurality of discharge paths.
Fig. 13 is a front view of a conventional collection hopper configured to receive articles thrown therein from two discharge paths.
Fig. 14 is a schematic view of the collection hopper illustrated in Fig. 13 and vicinity of an input port of a packaging machine.
Fig. 15 is a schematic perspective view of principal structural elements of the packaging machine.
Fig. 16 is a schematic drawing of a conventional example wherein collection hoppers are oscillated.
Fig. 17 is a schematic drawing of the collection hoppers oscillated in a direction different to the illustration of Fig. 16.

### EMBODIMENTS OF THE INVENTION

Hereinafter, an embodiment of the invention is described in detail referring to the accompanying drawings.

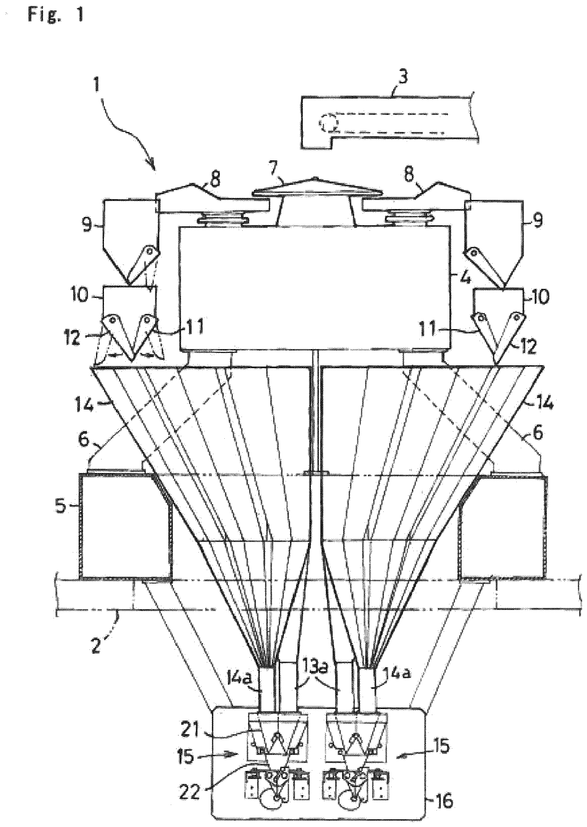

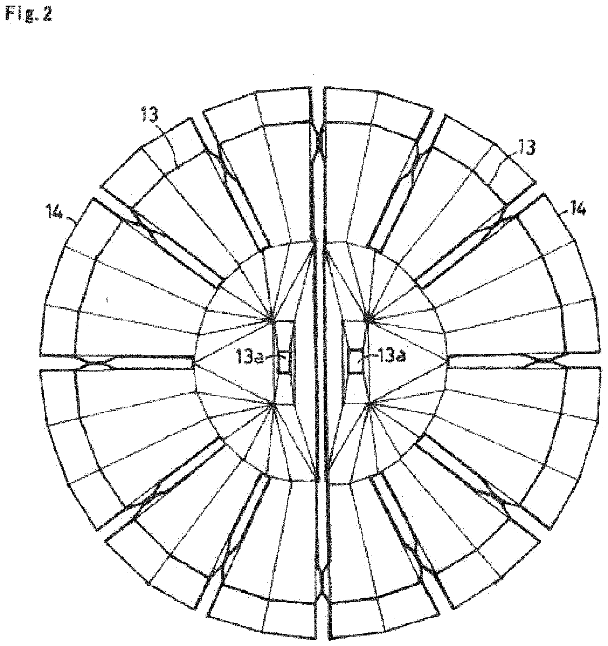

Fig. 1 is a longitudinal front view of a combination scale 1 provided with collection hoppers according to the embodiment. Fig. 2 is a transverse top view of its principal structural elements.

The combination scale 1 is used to weigh a certain quantity of articles to be packaged, typically sweets such as gummy candies. The combination scale 1 is disposed on a frame 2. The articles to be weighed are delivered by a feeding conveyer 3 into the combination scale 1 from a position upward at the center of the combination scale 1. The articles having a weight that falls within a predetermined weight range are discharged downward from a center part of the combination scale 1. The discharged articles are thrown into a packaging machine located down below the frame 2, not illustrated in the drawing, and packed in a bag.

The combination scale has a center body 4 at its center. The center body 4 is coupled to and supported by bases 5 disposed on the frame 2 with leg-like members 6 interposed therebetween. A distribution feeder 7 having a conical shape is disposed on the center body 4. The distribution feeder 7 radially distributes by way of vibrations the articles carried by the feeding conveyer 3 and arriving there. Around the distribution feeder 7 are a plurality of linear feeders 8 that transfer by way of vibrations the distributed articles further outward. At positions below delivery ends of the liner feeders 8, there are feeding hoppers 9 and weigh hoppers 10. The feeding hoppers 9 temporarily store therein and then discharge the articles received from the linear feeders 8. The weigh hoppers 10 are hoppers to be combined to store therein and weigh the articles discharged from the feeding hoppers 9. The hoppers 9 and 10 are attached to the center body 4.

Multiple weigh modules (28 modules in this example) are arranged annularly. Each of the weigh modules has a sequence of the linear feeder 8, feeding hopper 9, and weigh hopper 10. According to this embodiment, one half and the other half of the multiple weigh modules; a group of left-half modules and a group of right-half modules in Figs. 1 and 2 (respectively 14 modules in this example), independently perform combination weighing and discharge of articles.

The weigh hoppers 10 each have a pair of discharge gates; an inward discharge gate 11 and an outward discharge gate 12, thereby optionally discharging the weighed articles inward or outward.

In the combination scale 1, combination calculations are separately performed for the group of the 14 left-half weigh hoppers 10 and the group of the 14 right-half weigh hoppers 10. The weight values of the weighed articles in the 14 weigh hoppers 10 are variously combined to select a combination of the weigh hoppers 10 in which a total weight value falls within a predetermined weight range. The articles of the weigh hoppers 10 selectively combined are collectively discharged inward or outward alternately.

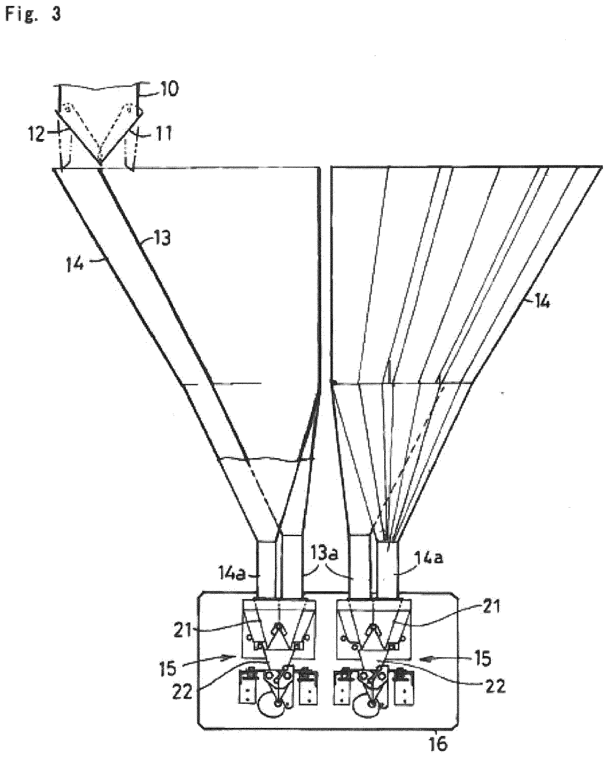

As illustrated in Fig. 3, inner and outer dual collecting chutes 13 and 14 are installed below the weigh hoppers 10. The inner and outer collecting chutes 13 and 14 collect the articles discharged inward or outward by selectively opening the discharge gates 11 and 12 and guide the articles downward toward the center of the combination scale 1. The inner and outer dual chutes 13 and 14 on the left and right sides are independent from each other correspondingly to the left-half weigh modules and the right-half weigh modules.

According to this embodiment, the left-half weigh modules and the right-half weigh modules respectively have two discharge paths. The two discharge paths are a discharge path provided by the inner collecting chute 13, and discharge path provided by the outer collecting chute 14.

Below the left-half collecting chutes 13 and the right-half collecting chutes 14, there are two collection devices 15 that collect and temporarily store therein the articles guided downward by the collecting chutes 13 and 14. The collection devices 15 are identically structured. The collection devices 15 are disposed in juxtaposition, respectively on the left and right, on a frame 16 coupled to and supported by the bases 5 illustrated in Fig. 1. The collection devices 15 respectively throw the articles temporarily stored therein into an input port of the packaging machine down below, not illustrated in the drawing, by desired timings. There may be two packaging machines correspondingly to the collection devices 15, or a twin-type single packaging machine with two input ports.

The collection devices 15 each have a collection hopper 21 on its upper side (hereinafter, "upper collection hopper") and a collection hopper 22 on its lower side (hereinafter, "lower collection hopper"). A detailed description is hereinafter given to their structures.

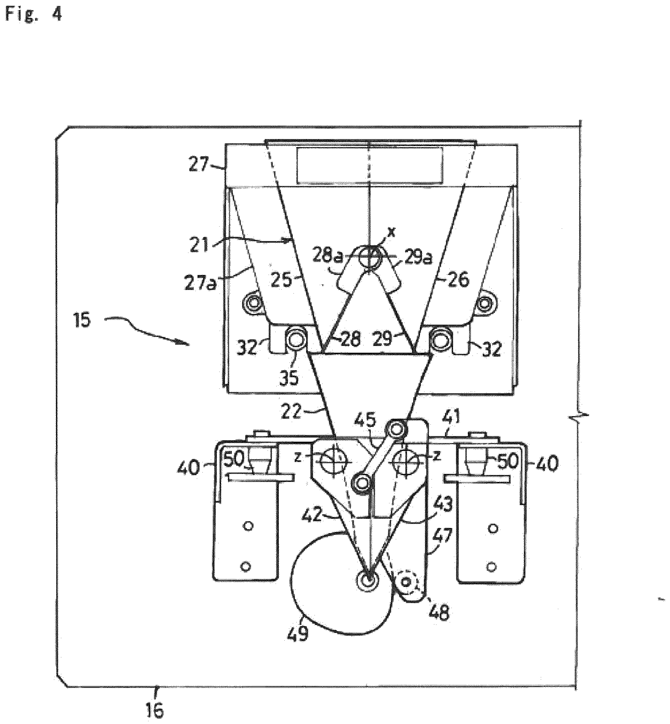

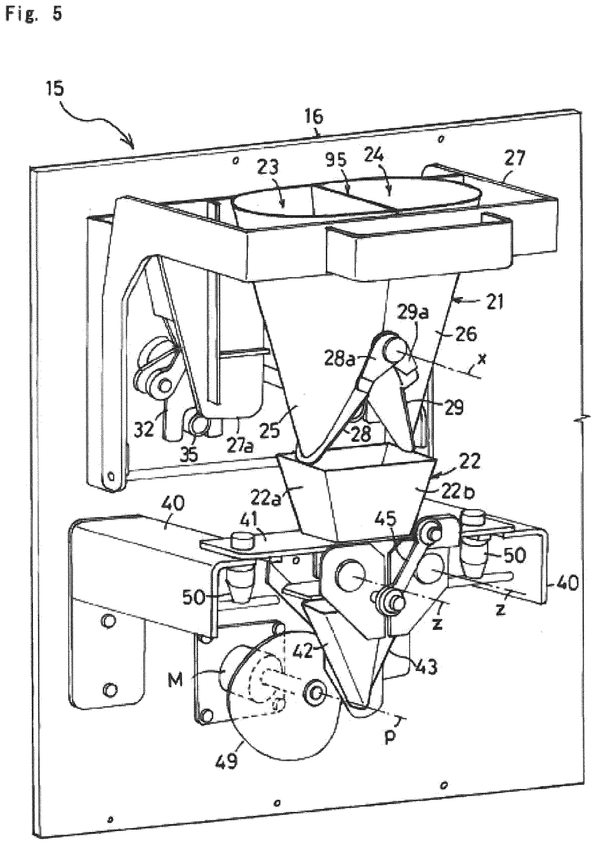

Fig. 4 is a front view of the collection device 15. Fig. 5 is a perspective view of the collection device 15. The upper collection hopper 21 has a pair of left and right hopper bodies 25 and 26 integrally coupled into a single unit. The hopper bodies 25 and 26 respectively form storage chambers 23 and 24 having a downwardly tapered shape. The hopper bodies 25 and 26 are supported on a front surface of the frame 16 by means of a support frame 27 so that openings at upper ends of the storage chambers 23 and 24 respectively face discharge ports 13a and 14a at lower ends of the inner and outer collecting chutes 13 and 14.

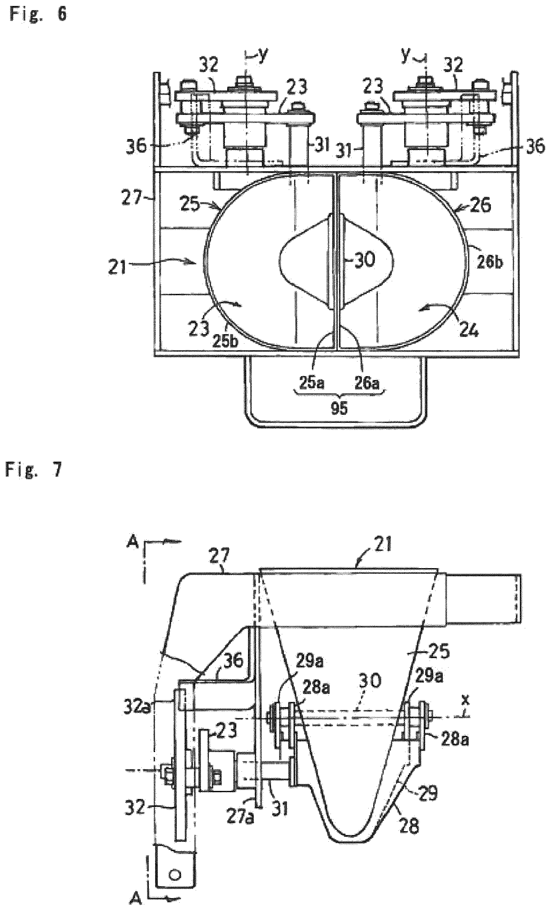

As illustrated in the top view of Fig. 6, the overall shape of the upper end openings of the upper collection hopper 21 are elliptical in top view. The upper collection hopper 21 is partitioned into the storage chambers 23 and 24 by a vertically flat partition wall 95 interposed at the center in the left and right direction thereof as their boundary. Therefore, shapes in top view of the respective upper end openings of the left and right storage chambers 23 and 24 are semi-elliptical which are left and right two halves of the elliptical shape.

According to this embodiment, the partition wall 95 is formed by integrally joining vertical walls 25a and 26a of the hopper bodies 25 and 26 defining the storage chambers 23 and 24 as illustrated in Fig. 6. The vertical walls 25a and 26a and semi-elliptical peripheral walls 25b and 26b continuous to these vertical walls respectively form the hopper bodies 25 and 26.

At opposite positions on the inner sides of the hopper bodies 25 and 26 are provided discharge gates 28 and 29 as illustrated in Figs. 4 and 5. The discharge gates 28 and 29 openably and closably oscillate around a common supporting point x horizontally extending in the front-rear direction of the apparatus.

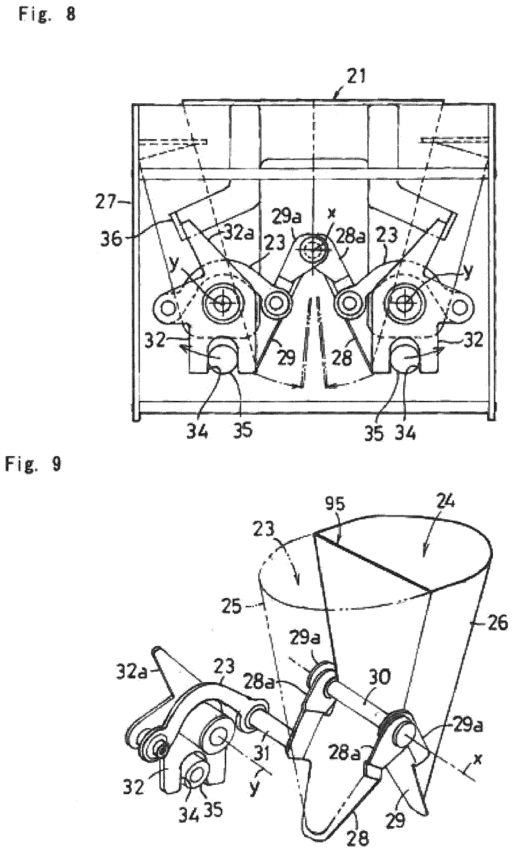

Fig. 7 is a side view of the upper collection hopper 21. Fig. 8 is a view of the upper collection hopper 21 taken along A-A line of Fig. 7. Fig. 9 is a perspective view of a discharge gate driving structure of the upper collection hopper 21.

A supporting point shaft 30 is fixedly provided so as to bridge, along the supporting point x, across a lower end of the partition wall 95 between the hopper bodies 25 and 26. There are two pairs of supporting point bosses 28a and 29a in the front-rear direction that are protruding from upper ends of th discharge gates 28 and 29. The supporting point bosses 28a and 29a of each pair are rotatably supported, in an alternately intersecting manner, to one end and the other end of the supporting point shaft 30 in the front-rear direction.

The hopper body 25 defining, of two storage chambers partitioned by the partition wall 95 located at the center as their boundary, the storage chamber 23 on the left side has a lower opening formed by cutting out the peripheral wall diagonally downward left from the lower end of the partition wall 95. The hopper body 26 defining the storage chamber 24 on the right side has a lower opening formed by cutting out the peripheral wall diagonally downward right from the lower end of the partition wall 95. The discharge gates 28 and 29 open and close the lower openings of the storage chambers 23 and 24.

The left storage chamber 23, when the discharge gate 28 opens, discharges the articles diagonally downward toward the center, i.e., diagonally downward right referred to as a first direction. The right storage chamber 24, when the discharge gate 29 opens, discharges the articles diagonally downward toward the center, i.e., diagonally downward left referred to as a second direction.

Operation shafts 31 are respectively protruding rearward (upward in Fig. 6, leftward in Fig. 7) from the discharge gates 28, 29. A pair of left and right operating members 32 is mounted, rotatably around a supporting point y extending in the front-rear direction, to left and right brackets 27a extending downward from the support frame 27. The operating member 32 and the operation shaft 31 of the discharge gates 28, 29 are coupled by a curved link 23 in an interlocking manner.

As illustrated in Figs. 8 and 9, the operating member 32 has a recess 34 that opens downward. A drive pin 35 engageably fitted in the recess 34 rotates back and forth around the supporting point y by a drive motor, not illustrated in the drawings, installed behind the frame 16, thereby rotating the operating member 32 forward and backward. This action of the operating member 32 openably and closably oscillates the discharge gates 28, 29 link-coupled to the operating member 32. Specifically, when one of the gates 28 (29) opens, dropping the articles diagonally downward, the other discharge gate 29 (28) closes, receiving the articles from the collecting chute 13 (14).

The operating member 32 has a regulating protrusion 32a. The regulating protrusion 32a abutting a stopper 36 behind the bracket 27a, as illustrated in Fig. 8, regulates the oscillatory motions of the discharge gates 28 and 29 in directions in which they are closed.

As illustrated in Figs. 4 and 5, the lower collection hopper 22 located below the upper collection hopper 21 is supported by means of a stay 41 on a support bracket 40 protruding on the front surface of the frame 16 in a manner that faces the lower openings of the storage chambers 23 and 24 of the upper collection hopper 21. The lower collection hopper 22 has a pair of left and right discharge gates 42 and 43, and a single storage chamber is defined when the paired discharge gates 42 and 43 are closed.

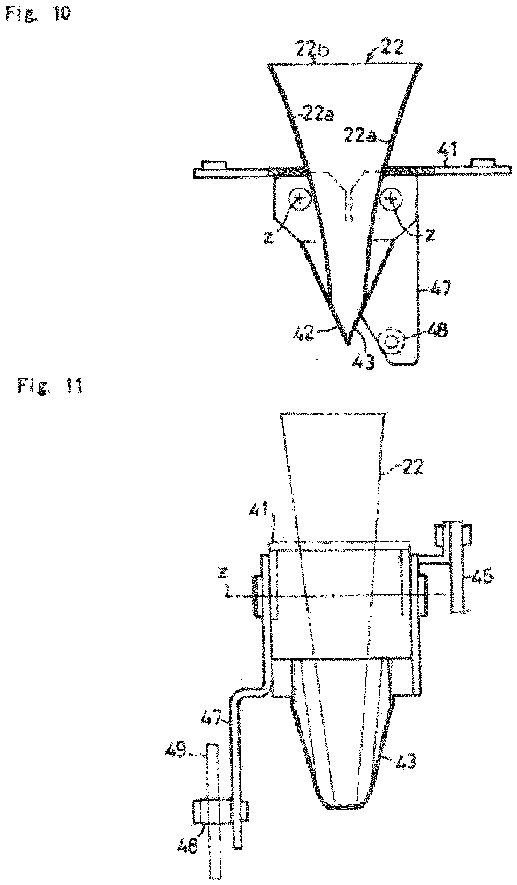

Fig. 10 is a longitudinal front view of the lower collection hopper 22. Fig. 11 is a side view of the discharge gate 43 of the lower collection hopper 22.

As illustrated in Fig. 5, the lower collection hopper 22 has an upper opening rectangular in top view. Referring to Fig. 10, left and right peripheral walls 22a respectively have surfaces protrudingly curved inward at a large curvature in their entirety and tapered downward. On the other hand, front and rear peripheral walls 22b respectively have inner surfaces flattened in their entirety. The lower ends of the front and rear peripheral walls 22b have a sharp-angled shape extending more downward than the left and right peripheral walls 22a.

The left and right discharge gates 42 and 43 are disposed in a manner that faces the lower ends of the front and rear peripheral walls 22b respectively on the left and right sides. The left and right discharge gates 42 and 43 are supported by means of the stay 41 so as to openably and closably oscillate around a supporting point z horizontally extending in the front-rear direction. The discharge gates 42 and 43 are oscillatably energized in directions in which they are closed by tensile springs not illustrated in the drawings.

A link 45 is provided so as to bridge across a lower part than the supporting point z of the discharge gate 42 and an upper part than the supporting point z of the discharge gate 43 to allow for oscillatory motions of these gates in opposite directions. Thus, the discharge gates 42 and 43 jointly open and close.

A cam follower 48 consisting of a floating roller is attached to an edge of an operating arm 47 extending downward from the discharge gate 43. An operating cam 49 that abuts the cam follower 48 is mounted to the drive shaft of a motor M illustrated in Fig. 5 and rotated around an axis p. The motor M is mounted to the frame 16. In concert with the rotation of the operating cam 49, the cam follower 48 runs on a diametrically large portion of the operating cam 49. Then, the left and right discharge gates 42 and 43 jointly open against an energizing force exerted to close them, and the cam follower 48 moves following a diametrically small portion of the operating cam 49. Then, the left and right discharge gates 42 and 43 jointly close by spring tension.

The stay 41 supporting the lower collection hopper 22 is fixedly fastened to the support bracket 40 by means of connecting bolts 50 equipped with left and right handles. When the connecting bolts 50 are loosened, the stay 41 can be pulled out forward and removed.

This embodiment provides the technical and structural features described thus far. The articles guided to and collected in the inner collecting chute 13 or the outer collecting chute 14 are thrown into and temporarily stored in the storage chamber 23, 24 of the upper collection hopper 21. Then, the articles are thrown into the lower collection hopper 22 by opening either one of the discharge gates 28 and 29.

The articles guided to and collected in the inner collecting chute 13 are thrown into and temporarily stored in the right storage chamber 24 of the upper collection hopper 21. When the discharge gate 28 of the left storage chamber 23 is closed, the discharge gate 29 is opened to throw the articles into the lower collection hopper 22. The articles are temporarily stored in the lower collection hopper 22 and then thrown into the packaging machine vertically downward not illustrated in the drawings.

The articles guided to and collected in the outer collecting chute 14 are thrown into and temporarily stored in the left storage chamber 23 of the upper collection hopper 21 with the discharge gate 28 being closed. The discharge gate 28 is opened when the discharge gate 29 of the right storage chamber 24 is closed, and the articles are thrown into the lower collection hopper 22. The articles are temporarily stored in the lower collection hopper 22 and then thrown into the packaging machine vertically downward not illustrated in the drawings.

The lower collection hopper 22 temporarily store therein the articles discharged from the storage chambers 23 and 24 of the upper collection hopper 21 and drops the articles vertically downward by opening the paired discharge gates 42 and 43 into the input port of the packaging machine not illustrated in the drawings.

In case of using smaller bags, naturally with smaller capacities, in the packaging machine, the opening of the forming tube 74 in communication with the input port 71 of the packaging machine 70 illustrated in Fig. 14 should be reduced in diameter. To throw the articles having a weight that falls within a predetermined weight range into the forming tube 74 thus having a smaller opening, the articles are likely to contact an opening edge of the forming tube 74 unless the articles are dropped from right above the forming tube 74. Any of the articles that contacted the opening edge may arrive later than the other articles at the position of the lateral sealing apparatus 80 below the forming tube 74. Such an article may be trapped in a part-to-be-sealed of the packing material during the lateral sealing, resulting in imperfect sealing.

This embodiment provides the lower collection hopper 22 immediately above the input port of the packaging machine, effectively preventing the occurrence of imperfect sealing in the packaging machine.

Further advantageously, the prior art technique of oscillating two collection hoppers to locate them right above the packaging machine is no longer unnecessary. This structural advantage may prevent the event that a part of the articles affected by inertia contact an edge of the input port, causing a delay in the arrival of such an article and a resulting imperfect sealing in the packaging machine.

The storage chambers 23 and 24 of the upper collection hopper 21 that store therein the articles discharged from the inner and outer collecting chutes 13 and 14 are integrally coupled to each other with the partition wall 95 interposed therebetween as their boundary. In contrast to the prior art illustrated in Fig. 13 wherein the collection hoppers 66 and 67 are separately provided, the lower openings of the storage chambers 23 and 24 may be located in proximity to each other, and the inner surfaces on which the articles are guided to be discharged may be inclined at steep angles.

This reduces time required for, of the articles alternately discharged from the storage chambers 23 and 24, the rear end of a rearmost article to arrive at the packaging machine right after the front edge of a foremost article arrived at the packaging machine, thereby improving the weighing speed with no risk of imperfect sealing due to the articles partly trapped in a part-to-be-sealed of the packing material in the packaging machine.

The discharge gates 58 and 29 of the storage chambers 23 and 24 oscillatably supported around the common supporting pointing shaft 30 may be compactly structured.

### Another Embodiment

The invention may be implemented as described below.
1) The upper collection hopper 21 according the embodiment described above has two storage chambers 23 and 24 that temporarily store therein the articles discharged from two discharge paths formed by two collecting chutes 13 and 14 and then drop the articles downward. According to another embodiment of the invention, there may be three or more storage chambers that temporarily store therein the articles discharged from three or more discharge paths and then drop the articles downward. These three or more storage chambers are juxtaposed to one another, and adjacent ones of the storage chambers are defined by a partition wall interposed therebetween as their boundary. Of the juxtaposed storage chambers, two storage chambers on both end sides each have one discharge gates 28, 29 on a side thereof facing the adjacent storage chamber, as with the storage chambers 23 and 24. Any storage chambers but the two on both end sides are interposed between the adjacent storage chambers. These storage chambers each have discharge gates on a side thereof facing one of the adjacent storage chambers and another side thereof facing the other storage chamber.
   In the case of three storage chambers, for example, a storage chamber having a rectangular upper opening, for example, may be disposed between the storage chambers 23 and 24 according to the foregoing embodiment. The storage chambers 23 and 24 are located on both end sides, and a storage chamber is interposed between these storage chambers. The storage chamber in the middle similarly has a downwardly tapered shape. This storage chamber in the middle has, in its lower part, an opening facing the discharge gate 28 of the storage chamber 23 and an opening facing the discharge gate 29 of the storage chamber 24, wherein these openings are opened and closed by the respective discharge gates.
2) According to the described embodiment, the articles are stored in the collecting chutes 13 and 14 and then thrown into the upper collection hopper 21. There may be another upper collection hopper above the upper collection hopper 21, from which the articles may be thrown into the upper collection hopper 21.
3) The partition wall 95 of the upper collection hopper 21 is formed by joining the vertical walls 25a and 26a of the two hopper bodies 25 and 26. Instead, the partition wall may consist of one vertical wall.
4) Depending on properties of the articles, the overall shape of the upper end openings of the upper collection hopper 21 may be substantially rectangular in top view with four corners curved at a relatively large curvature.
5) According to the embodiment described so far, two discharge paths are formed by the inner and outer collecting chutes, however, this is a nonlimiting example. Two discharge paths may be provided by, for example, dividing an annularly arranged weigh hopper into a right half and a left half to form a discharge path by way of the left half weigh hopper and another discharge path by way of the right half weigh hopper.

### DESCRIPTION OF REFERENCE NUMERALS

- 1: combination scale
- 21: upper collection hopper
- 22: lower collection hopper
- 23: storage chamber
- 24: storage chamber
- 28: discharge gate
- 28a: supporting point boss
- 29: discharge gate
- 29a: supporting point boss
- 30: supporting point shaft
- x: supporting point

## Claims

1. A combination scale, comprising:
a plurality of hoppers (10) to be combined configured to temporarily store and then discharge articles thrown therein;
two collecting chutes (13,14) disposed below the plurality of the hoppers, the two collecting chutes (13,14) adapted to collect the articles selectively discharged from a combination of the hoppers (10) that store therein the articles having a weight that falls within a predetermined weight range and to discharge the collected articles through discharge ports (13a,14a) at lower ends thereof; and
an upper collection hopper (21) configured to temporarily store the articles discharged and thrown therein through the discharge ports (13a,14a) of the two collecting chutes (13,14) and then to discharge the articles in diagonally downward directions;
the upper collection hopper (21) comprises two storage chambers that store therein the articles (23, 24), respectively,
the two storage chambers (23,24) are integrally coupled into a single unit with a partition wall (95) interposed therebetween as a boundary,
one of the storage chambers (23,24) is adapted to discharge the stored articles in the diagonally downward direction defined as a first direction, and another one of the storage chambers (23,24) adapted to discharge the stored articles in the diagonally downward direction defined as a second direction,
the storage chambers (23,24) of the upper collection hopper (21) respectively have upper openings facing discharge ports (13a,14a) of the two collecting chutes (13,14), lower openings through which the articles are to be discharged in the first direction or the second direction, and gates (28,29) that are adapted to open and close the lower openings,
**characterized by** a lower collection hopper (22) configured to temporarily store the articles discharged and thrown therein from the upper collection hopper (21) and then to discharge the articles vertically downward, wherein
the lower collection hopper (22) comprises a single storage chamber that is adapted to temporarily store therein the articles discharged from the storage chambers (23,24) of the upper collection hopper (21) and then to discharge the articles vertically downward,
shapes in top view of the upper openings of the storage chambers (23, 24) are semi-elliptical which are two halves of the elliptical shape with the partition wall (95), and
the gates (28, 29) which open and close the lower openings of the storage chambers (23, 24) of the upper collection hopper (21) are supported on and oscillate around a common supporting point shaft (30), such that when one of the gates (28,29) opens the lower opening of one storage chamber, the other gate closes the opening of the other storage chamber.

2. The combination scale according to claim 1, wherein
the storage chamber of the lower collection hopper (22) has an upper opening through which the articles discharged through the lower openings of the storage chambers (23, 24) of the upper collection hopper (21) are to be thrown in, a lower opening through which the articles are to be discharged vertically downward, and a pair of gates (42, 43) that opens and closes the lower opening.

3. The combination scale according to claim 1 or 2, wherein
the storage chambers (23, 24) of the upper collection hopper (21) and the storage chamber of the lower collection hopper (22) have a downwardly tapered shape.

4. The combination scale according to claim 3, wherein
a peripheral wall (22a) of the storage chamber of the lower collection hopper (22) has opposing inner surfaces curved inward.

## Patentansprüche

1. Eine Kombinationswaage, umfassend
eine Mehrzahl von zu kombinierenden Trichtern (10), ausgeführt, um hineingeworfene Artikel zwischenzuspeichern und dann auszugeben;
zwei unterhalb der Mehrzahl an Trichtern angeordnete Sammelrutschen (13, 14), wobei die zwei Sammelrutschen (13, 14) ausgeführt sind, um die Artikel sammeln, die selektiv von einer Kombination der Trichter (10) ausgegeben werden, welche die Artikel speichern, deren Gewicht in einen vorbestimmten Gewichtsbereich fällt und welche die gesammelten Artikel durch Ausgabeöffnungen (13a, 14a) an ihren unteren Enden ausgeben, und
einen oberen Sammeltrichter (21), ausgeführt, um die Artikel, die aus den Ausgabeöffnungen (13a, 14a) der zwei Sammelrutschen (13, 14) ausgegeben und in diesen eingeworfen werden, zwischenzuspeichern und anschließend in schräg nach unten gerichtete Richtungen auszugeben;
wobei der obere Sammeltrichter (21) zwei Stauräume (23, 24) umfasst, welche jeweils die Artikel speichern,
die zwei Stauräume (23, 24) als eine einstückige Einheit mit einer dazwischen angeordneten Trennwand (95) als Begrenzung ausgeführt sind,
einer der Stauräume (23, 24) ausgeführt ist, um die gespeicherten Artikel in einer schräg nach unten gerichteten Richtung auszugeben, die als eine erste Richtung definiert ist, und der andere der Stauräume (23, 24) ausgeführt ist, um die gespeicherten Artikel in einer schräg nach unten gerichteten Richtung auszugeben, die als eine zweite Richtung definiert ist,
die Stauräume (23, 24) des oberen Sammeltrichters (21) jeweils obere Öffnungen umfassen, die den Ausgabeöffnungen (13a, 14a) der zwei Sammelrutschen (13, 14) zugewandt sind, sowie untere Öffnungen, durch welche die Artikel in der ersten Richtung oder der zweiten Richtung ausgegeben werden, und Gatter (28, 29), die ausgeführt sind, um die unteren Öffnungen zu öffnen und zu schließen,
**gekennzeichnet durch** einen unteren Sammeltrichter (22), der ausgeführt ist, um die von dem oberen Sammeltrichter (21) ausgegebenen und hineingeworfenen Artikel zwischenzuspeichern und dann senkrecht nach unten auszugeben, wobei
der untere Sammeltrichter (22) einen einzigen Stauraum umfasst, der ausgeführt ist, die Artikel zwischenzuspeichern, die von den Stauräumen (23, 24) des oberen Sammeltrichters (21) ausgegeben werden und der die Artikel dann senkrecht nach unten ausgibt,
wobei die Formen der oberen Öffnungen der Stauräume (23, 24) in Draufsicht halbelliptisch sind, welche zwei Hälften der elliptischen Form mit der Trennwand (95) bilden, und
wobei die Gatter (28, 29), welche die unteren Öffnungen der Stauräume (23, 24) des oberen Sammeltrichters (21) öffnen und schließen, auf einer gemeinsamen Lagerwelle (30) gelagert sind und um diese herum so schwingen, dass wenn eines der Gatter (28, 29) die untere Öffnung eines der Stauräume öffnet, das andere Gatter die Öffnung des anderen Stauraums schließt.

2. Kombinationswaage nach Anspruch 1, wobei
der Stauraum des unteren Sammeltrichters (22) eine obere Öffnung umfasst, durch welche die Artikel eingeworfen werden, die durch die unteren Öffnungen der Stauräume (23, 24) des oberen Sammeltrichters (21) ausgegeben werden, sowie eine untere Öffnung, durch welche die Artikel senkrecht nach unten ausgegeben werden, und ein Paar von Gattern (42, 43), welche die untere Öffnung öffnen und schließen.

3. Kombinationswaage nach Anspruch 1 oder 2, wobei
die Stauräume (23, 24) des oberen Sammeltrichters (21) und der Stauraum des unteren Sammeltrichters (22) eine nach unten zusammenlaufende Form haben.

4. Kombinationswaage nach Anspruch 3, wobei eine Außenwand (22a) des Stauraums des unteren Sammeltrichters (22) gegenüberliegende, nach innen gekrümmte Innenflächen aufweist.

## Revendications

1. Balance à combinaison, comprenant :
une pluralité de trémies (10) devant être combinées, configurées de façon à stocker temporairement, puis à décharger, des articles jetés à l'intérieur de celles-ci ;
deux goulottes de collecte (13, 14) disposées en dessous de la pluralité des trémies, les deux goulottes de collecte (13, 14) étant adaptées de façon à collecter les articles déchargés de façon sélective à partir d'une combinaison des trémies (10) qui stockent à l'intérieur de celles-ci les articles ayant un poids qui rentre à l'intérieur d'une plage de poids prédéterminée et à décharger les articles collectés à travers des orifices de décharge (13a, 14a) à des extrémités inférieures de celles-ci ; et
une trémie de collecte supérieure (21) configurée de façon à stocker temporairement les articles déchargés et jetés à l'intérieur de celle-ci à travers les orifices de décharge (13a, 14a) des deux goulottes de collecte (13, 14), puis à décharger les articles dans des directions en diagonale vers le bas ;
la trémie de collecte supérieure (21) comprenant deux chambres de stockage qui stockent à l'intérieur de celles-ci les articles (23, 24), respectivement,
les deux chambres de stockage (23, 24) étant couplées d'un seul tenant en une unité unique avec une paroi de séparation (95) interposée entre celles-ci comme limite,
l'une des chambres de stockage (23, 24) étant adaptée de façon à décharger les articles stockés dans la direction en diagonale vers le bas définie comme étant une première direction, et une autre des chambres de stockage (23, 24) étant adaptée de façon à décharger les articles stockées dans la direction en diagonale vers le bas définie comme étant une deuxième direction,
les chambres de stockage (23, 24) de la trémie de collecte supérieure (21) comportant respectivement des ouvertures supérieures faisant face aux orifices de décharge (13a, 14a) des deux goulottes de collecte (13, 14), des ouvertures inférieures à travers lesquelles les articles doivent être déchargés dans la première direction ou la deuxième direction, et des portes (28, 29) qui sont adaptées de façon à ouvrir et à fermer les ouvertures inférieures,
**caractérisée par** une trémie de collecte inférieure (22) configurée de façon à stocker temporairement les articles déchargés et jetés à l'intérieur de celle-ci à partir de la trémie de collecte supérieure (21), puis à décharger les articles verticalement vers le bas, dans laquelle :
la trémie de collecte inférieure (22) comprend une chambre de stockage unique qui est adaptée de façon à stocker temporairement à l'intérieur de celle-ci les articles déchargés à partir des chambres de stockage (23, 24) de la trémie de collecte supérieure (21), puis à décharger les articles verticalement vers le bas,
des formes en vue de dessus des ouvertures supérieures des chambres de stockage (23, 24) sont semi-elliptiques, c'est-à-dire qu'elles constituent deux moitiés de la forme elliptique avec la paroi de séparation (95), et
les portes (28, 29) qui ouvrent et qui ferment les ouvertures inférieures des chambres de stockage (23, 24) de la trémie de collecte supérieure (21) sont supportées sur un arbre de point de support commun (30) et oscillent autour de celui-ci, de telle sorte que, lorsque l'une des portes (28, 29) ouvre l'ouverture inférieure d'une chambre de stockage, l'autre porte ferme l'ouverture de l'autre chambre de stockage.

2. Balance à combinaison selon la revendication 1, dans laquelle :
la chambre de stockage de la trémie de collecte inférieure (22) comporte une ouverture supérieure à travers laquelle les articles déchargés à travers les ouvertures inférieures des chambres de stockage (23, 24) de la trémie de collecte supérieure (21) doivent être jetés, une ouverture inférieure à travers laquelle les articles doivent être déchargés verticalement vers le bas, et une paire de portes (42, 43) qui ouvrent et qui ferment l'ouverture inférieure.

3. Balance à combinaison selon la revendication 1 ou 2, dans laquelle :
les chambres de stockage (23, 24) de la trémie de stockage supérieure (21) et la chambre de stockage de la trémie de collecte inférieure (22) ont une forme effilée vers le bas.

4. Balance à combinaison selon la revendication 3, dans laquelle :
une paroi périphérique (22a) de la chambre de stockage de la trémie de collecte inférieure (22) comporte des surfaces intérieures opposées incurvées vers l'intérieur.
